# EUROPEAN PATENT APPLICATION

(11) **EP 2 884 571 A1**
(43) Date of publication of application: **17.06.2015**
(21) Application number: 13863691.5
(22) Date of filing: 17.07.2013
(51) Int. Cl.: H01M 8/02

(54) **FUEL ELECTRODE WHICH ALSO SERVES AS SUPPORTING BODY OF SOLID OXIDE FUEL CELL, AND FUEL ELECTRODE-SUPPORTED SOLID OXIDE FUEL CELL**

(30) Priority: 13.08.2012 JP 2012179439
(71) Applicant: Kabushiki Kaisha Riken, Chiyoda-ku, Tokyo 102-8202 (JP)
(72) Inventor: OKAMOTO, Takashi, Saitama 3608522 (JP)
(74) Representative: Wilson, Gary
(86) International application number: PCT/JP2013/004367
(87) International publication number: WO 2014/027442

(57) **Abstract**

The present invention provides a fuel electrode doubling as a support of a solid oxide fuel cell that hardly deteriorates conductivity and strength thereof through repetitive exposure to reducing atmosphere/oxidizing atmosphere. The fuel electrode doubling as the support of the solid oxide fuel cell according to the present invention includes: a porous structure formed of first oxide particles having a 10% cumulative particle diameter between 5 µm and 12 µm and a 90% cumulative particle diameter between 84 µm and 101 µm; and electrode particles having an electrode catalytic activity that cover a surface in a gap of the porous structure and have a surface covered with second oxide particles by 10% to 70%.

## Description

### TECHNICAL FIELD

The present invention relates to a fuel electrode doubling as a support of a solid oxide fuel cell, a fuel-electrode-supported solid oxide fuel cell, and methods of producing them.

### BACKGROUND ART

A solid oxide fuel cell (hereinafter, referred to as SOFC) that generates power by supplying a combustible gas such as hydrogen and an oxidizing gas containing oxygen to a fuel cell configured by separating a fuel electrode and an air electrode with a solid oxide electrolyte has been known. Since the SOFC operates at high temperature and thus has high power generation efficiency as well as being capable of generating power also from a fuel gas other than pure hydrogen, the SOFC is expected as a next generation fuel cell.

The SOFC is primarily categorized into an electrolyte-supported cell having a thick electrolyte and a fuel-electrode-supported cell having a thick fuel electrode. However, since the electrolyte causes significant internal resistance during power generation, the fuel-electrode-supported cell that may have a thin electrolyte has been increasingly used for the purpose of improving a battery performance.

As the fuel electrode of the fuel-electrode-supported cell, nickel-zirconia cermet obtained by mixing nickel oxide with an average particle diameter of approximately 1 µm (NiO, note that it changes into Ni metal during operation of the fuel cell) and zirconia (ZrO₂) fine particles with an average particle diameter of approximately 0.5 µm has been known.

Also, JP 2009-224346 A (PLT 1) describes a fuel electrode material that consists of a mixture of zirconia coarse particles, zirconia fine particles, and nickel or nickel oxide particles, where diameters of these particles satisfy the following relationship: zirconia coarse particles>nickel or nickel oxide particles>zirconia fine particles, and weights of the zirconia coarse particles, the nickel or nickel oxide particles, and the zirconia fine particles satisfy the following ratio: 7-4:3-6:1.

Also, there has been a report about, from the viewpoint of filling up with particles, an impact of excess gaps on a filling density of a two-component mixture of fine particles and coarse particles (NPL 1).

Further, there is suggested a technique that improves oxidation-reduction resistance by covering core particles of nickel oxide with ceria (JP 2010-251141 A (PLT2)).

There are also suggested a method of forming the fuel cell on a metallic porous body (JP 2005-174664 A (PLT3)) and a method of forming an electrolyte on a disappearing porous material, calcining the electrolyte together with the disappearing porous material, and then impregnating a porous portion with an electrode material (JP 07-201341 A (PLT4)).

### CITATION LIST

### Non-patent Literature

NPL 1: J. CeramJpn, 101[11]1234-1238 (1993)

### Patent Literature

PLT 1: JP 2009-224346 A
PLT 2: JP 2010-251141 A
PLT 3: JP 2005-174664 A
PLT 4: JP 07-201341 A

### SUMMARY OF INVENTION

### TECHNICAL PROBLEM

The fuel electrode is in a reducing atmosphere during operation of the SOFC, as hydrogen is supplied to the fuel electrode. However, at stop of the operation, the air reaches the fuel electrode and the fuel electrode enters in an oxidizing atmosphere. Therefore, in the course of use repeating operation of SOFC and stop operation, the fuel electrode is exposed alternately to the reducing atmosphere/oxidizing atmosphere. In the oxidizing atmosphere, electrode particles Ni of the fuel electrode are oxidized to NiO and a volume of the electrode particles expand. Such irreversible expansion of the electrode particles leads to deterioration of conductivity and strength of the fuel electrode, causing impaired battery characteristics and reduced life of the SOFC. Further, gradual aggregation of the Ni particles in the course of repetition of the reducing atmosphere/oxidizing atmosphere has been also a cause of deterioration of the battery characteristics of the SOFC.

Therefore, a fuel electrode whose conductivity and strength does not deteriorate through repetitive exposure to the reducing atmosphere/oxidizing atmosphere has been required. According to studies by the inventor, however, it was found that neither conventional nickel-zirconia cermet nor the fuel electrode produced from the fuel electrode material described in PLT 1 meets the requirement.

Accordingly, in consideration of the above problems, the present invention aims to provide a fuel electrode doubling as a support of a solid oxide fuel cell, whose conductivity and strength hardly lower through repetitive exposure to the reducing atmosphere/oxidizing atmosphere, as well as to provide a method of producing such a fuel electrode. The present invention also aims to provide a fuel-electrode-supported solid oxide fuel cell having a long life with improved cycle resistance of the fuel electrode, and also to provide a method of producing such a fuel-electrode-supported solid oxide fuel cell.

### SOLUTION TO PROBLEM

A summary constitution of the present invention for achieving the above objects is as follows.
(1) A fuel electrode doubling as a support of a solid oxide fuel cell includes:
   a porous structure formed of first oxide particles having a 10% cumulative particle diameter between 5 µm and 12 µm and a 90% cumulative particle diameter between 84 µm and 101 µm; and
   electrode particles having an electrode catalytic activity that cover a surface in a gap of the porous structure and have a surface covered with second oxide particles by 10% to 70%.
(2) The fuel electrode according to the above (1), wherein the electrode material has a surface covered with the second solid oxide by 20% to 60%.
(3) A fuel-electrode-supported solid oxide fuel cell includes the fuel electrode according to the above (1) or (2), a solid oxide electrolyte film formed on the fuel electrode, and an air electrode formed on the solid oxide electrolyte film.
(4) A method of producing a fuel electrode doubling as a support of a solid oxide fuel cell includes steps of:
   obtaining a compact from slurry containing powder of first oxide particles having a 10% cumulative particle diameter between 5 µm and 12 µm and a 90% cumulative particle diameter between 84 µm and 101 µm, powder of electrode particles having an electrode catalytic activity, and second oxide particles; and
   calcining the compact and thus obtaining a fuel electrode having a porous structure formed of the first oxide particles and the electrode particles that cover a surface in a gap of the porous structure and have a surface covered with the second oxide particles by 10% to 70%.
(5) A method of producing a fuel-electrode-supported solid oxide fuel cell includes, in addition to the steps of the method of producing the fuel electrode according to the above (4), a step of forming a solid oxide electrolyte film on the fuel electrode and a step of forming an air electrode on the solid oxide electrolyte film.
(6) The method of producing the solid oxide fuel cell according to the above (5), wherein the solid oxide electrolyte film is formed by applying an electrolyte material on the compact and calcining the compact together with the electrolyte material.

### EFFECT OF THE INVENTION

According to the fuel electrode doubling as the support of the solid oxide fuel cell of the present invention, conductivity and strength hardly lower through repetitive exposure to the reducing atmosphere/oxidizing atmosphere. Also, the fuel-electrode-supported solid oxide fuel cell according to the present invention may achieve a long life with improved cycle resistance of the fuel electrode.

### BRIEF DESCRIPTION OF DRAWINGS

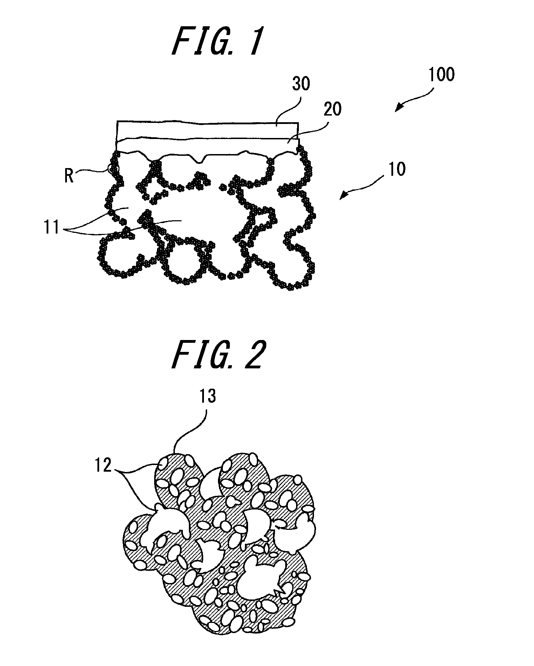

FIG. 1 is a schematic diagram illustrating an example of a microstructure of a solid oxide fuel cell according to the present invention; and FIG 2 is an enlarged view of a circled portion denoted by R in FIG. 1.

### DESCRIPTION OF EMBODIMENTS

The following is a description of embodiments of a fuel electrode doubling as a support of a solid oxide fuel cell according to the present invention, a fuel-electrode-supported solid oxide fuel cell, and methods of producing them.

### (Fuel electrode and method of producing the same)

First, a method of producing the fuel electrode according to one embodiment of the present invention will be described. According to this method, slurry is prepared from powder of yttria stabilized zirconia (YSZ) particles as first oxide particles, powder of NiO particles as electrode particles having an electrode catalytic activity, and zirconia particles as second oxide particles. A dispersion medium of the slurry may be, for example, an organic solvent or a binder.

Here, the YSZ particles have a 10% cumulative particle diameter between 5 µm and 12 µm and a 90% cumulative particle diameter between 84 µm and 101 µm. Also, the NiO particles may have an average particle diameter of 0.5 to 5 µm. The zirconia particles as the second oxide particles may be either in a sol state or in a powder state. When the zirconia particles are in the sol state, dispersed zirconia particles have an average particle diameter of 0.1 µm or smaller. When the zirconia particles are in the powder state, the zirconia particles have an average particle diameter of 0.2 to 1.0 µm.

Although the electrode particles in the present embodiment are NiO at a stage of production process of the fuel electrode, the electrode particles change into Ni in principle at a stage of power generation by the SOFC. However, as previously mentioned, expansion due to an irreversible oxidation reaction of Ni changing into NiO in the course of use of the SOFC has been a problem to be solved.

As the organic solvent, ethanol, α terpineol, butanol, or a mixture thereof may be used. As the binder, ethyl cellulose, polyvinyl butyral, or the like may be used. Also, in order to improve formability, a plasticizer such as dioctyl phthalate, or a surfactant may be added.

The slurry is molded by using a predetermined method, so as to obtain a compact. By calcining the compact, the fuel electrode may be obtained.

A fuel electrode 10 according to one embodiment of the present invention that may be obtained by the above producing method will be described with reference to FIG. 1 and FIG 2. The fuel electrode 10 includes a porous structure formed of zirconia particles 11 as the first oxide particles and Ni particles 13 as the electrode particles covering a surface in a gap of the porous structure and having the electrode catalytic activity.

For conventional fuel electrode made of nickel-zirconia cermet, nickel oxide with an average particle diameter of approximately 1 µm, zirconia fine particles with an average particle diameter of approximately 0.5 µm, and a foaming material are mixed together into slurry, which is then molded and calcined. Thereby, a porous body is obtained. However, this fuel electrode has neither a strong framework structure nor a strong binding between the zirconia fine particles and NiO. Therefore, when the fuel electrode is exposed alternately to a reducing atmosphere/oxidizing atmosphere in a repetitive manner, Ni is oxidized to NiO and a volume of the electrode particles irreversibly expands in the oxidizing atmosphere, deteriorating the strength of the fuel electrode as described above and generating cracks. In the reducing atmosphere, also, aggregation of the electrode particles progresses, lowering conductivity.

Here, the fuel electrode 10 according to the present embodiment has a framework having gaps (pores) therein formed by the zirconia particles 11 as the first oxide particles. The zirconia particles 11 have the same thermal expansion coefficient as that of a material of a solid oxide electrolyte film 20 (described below), which is non-redox.

Also, on the surface in the gap, Ni particles 13 having a surface covered with zirconia fine particles 12 serving as the second oxide particles by a predetermined ratio as illustrated in FIG 2 are placed being connected to one another. Although a volume of the Ni particle 13 changes in association with an oxidation-reduction reaction, such a volume change has only a small impact on the framework, as can be seen from the structures illustrated in FIG 1 and FIG 2.

That is, in the fuel electrode 10, the first oxide particles that are not easily reduced through a change to the reducing atmosphere are connected to one another forming the framework, around which the electrode particles are connected to one another. Accordingly, the volume change associated with the oxidation-reduction reaction of the electrode particles has only a small impact on the framework. Also, since the second solid oxide is positioned around the electrode particle, the second solid oxide acts to suppress aggregation of the electrode particles. It is considered that, based on such behaviors, the fuel electrode 10 according to the present embodiment may obtain an effect to hardly deteriorate conductivity and strength through repetitive exposure to the reducing atmosphere/oxidizing atmosphere.

As a first characteristic structure of the present embodiment, the zirconia particles 11 forming the framework have a particle size distribution with a 10% cumulative particle diameter between 5 µm and 12 µm and a 90% cumulative particle diameter between 84 µm and 101 µm. Since the first solid oxide forms the framework of the electrode material, the 10% cumulative particle diameter is preferably larger than an average particle diameter of the electrode material, and thus is 5 µm or larger. When the 90% cumulative particle diameter is larger than 101 µm, a ratio occupied by the framework material is increased, impeding the conductivity. Further, when the 10% cumulative particle diameter is larger than 12 µm, and also when the 90% cumulative particle diameter is smaller than 84 µm, a spread of the particle size distribution becomes small, reducing the strength of the framework. With the particle size distribution described above, a strong framework formed of the first solid oxide continuously connected to one another may be formed. Note that the particle size distribution is adjusted by a conventional method.

As a second characteristic structure of the present embodiment, the Ni particle 13 has a surface covered with the zirconia fine particles 12 by 10% to 70%. Hereinafter, an index therefor is referred to as a "coverage". Thereby, without deteriorating activities of the electrode particles, aggregation of the electrode particles associated with the oxidation-reduction reaction may be suppressed. That is, aggregation of the electrode particles may not be sufficiently suppressed when the coverage is lower than 10%, while formation of a conductive path is hindered when the coverage exceeds 70%. Accordingly, the coverage is preferably between 20% and 60%.

Hereinafter, the coverage is determined by a ratio: concentration of the second oxide/(concentration of the electrode material + concentration of the second oxide), i.e., for example, concentration of Zr/(concentration of Ni + concentration of Zr), obtained by an energy dispersive quantitative analysis of the electrode particles magnified by an electron microscope at a magnification of 10000 under an accelerating voltage of 25 kV. Also, the coverage is adjusted by controlling adding amounts of the electrode particles and the second oxide when they are used as raw materials.

Further, the fuel electrode according to the present invention preferably has a porosity of 20% to 60%. With the porosity within this range, the fuel electrode, as a gas electrode, may retain gas diffusion characteristics. The porosity less than 20% causes insufficient gas supply, while the porosity over 60% reduces mechanical strength.

Although a thickness of the fuel electrode 10 is not particularly limited as long as the fuel electrode may be used as the support of the SOFC, the thickness is preferably 0.2 to 5 mm. The fuel electrode having the thickness of at least 0.2 mm may be reliably used as the support, and the fuel electrode having the thickness of no more than 5 mm may supply a fuel gas in the right amount to an electrolyte surface.

The following is a further description of preferable conditions of the present embodiment.

Each of the first oxide and the second oxide may be at least one selected from a group including zirconia, alumina, silica, and ceria, and is preferably stabilized zirconia. As the stabilized zirconia, for example, yttria stabilized zirconia (YSZ), calcia stabilized zirconia, and magnesia stabilized zirconia may be mentioned. Particle diameters thereof are mentioned above. As the electrode particles, for example, nickel or powder of oxide nickel may be used. NiO particles having copper or cobalt added thereto may also be used. Particle diameters thereof are mentioned above.

As a method of obtaining the compact from the slurry, a wet method may be mentioned. By using a method of casting the slurry in a predetermined mold, a method of extrusion molding with viscosity control, or a method of impregnating, with the slurry, a sponge made of urethane or PVA having a meshwork transferring the framework structure, the compact may be finished in a desired shape.

The compact is calcined under a condition of, for example, at the temperature of 1300 to 1500°C in the atmosphere for 1 to 10 hours. Thereby, a ceramic component in the compact and in the slurry is sintered, and thus the fuel electrode is finalized.

In the present specification, the term "average particle diameter", for powder of oxide particles and powder of electrode particles contained in the slurry, means a particle diameter at a cumulative value 50% (50% cumulative particle diameter: D50) in a particle size distribution obtained by a laser diffraction scattering method. For the sol, manufacturer's indications of commercially available products in use are followed.

### (Solid oxide fuel cell and method of producing the same)

Next, the solid oxide fuel cell (SOFC) and a method of producing the same according to one embodiment of the present invention will be described. This method includes, in addition to the steps of the method of producing the fuel electrode 10 according to the present invention described above, a step of forming the solid oxide electrolyte film 20 on the fuel electrode 10 and a step of forming an air electrode 30 on the solid oxide electrolyte film 20. This method enables obtainment of a fuel-electrode-supported SOFC 100 characterized in having the fuel electrode 10, the solid oxide electrolyte film 20 formed on the fuel electrode 10, and the air electrode 30 formed on the solid oxide electrolyte film 20 as illustrated in FIG. 1. The SOFC 100, as described above, has the fuel electrode 10 with improved cycle resistance and thus may achieve a long life.

The solid oxide electrolyte film and the air electrode may be produced by conventional methods. Typically, a ceramic material such as YSZ and the like is used as the electrolyte material and slurry thereof is applied on the fuel electrode 10, and then calcination is carried out. For the air electrode, (La_{0.8}Sr_{0.2}) MnO₃ may be used as a material of the air electrode and slurry thereof is applied on the calcined solid oxide electrolyte film, and then calcination is carried out. Since the present embodiment is for the fuel-electrode-supported SOFC, a thickness of the solid oxide electrolyte film 20 may be about 5 to 50 µm.

Here, preferably, the compact and the electrolyte material are calcined together. That is, the electrolyte material is applied on the compact prior to calcination and the compact and the electrolyte material are calcined together such that the fuel electrode 10 and the solid oxide electrolyte film 20 are obtained at a time. As a result, a contraction difference between the compact and the electrolyte material may be reduced and generation of cracks may be suppressed.

### EXAMPLES

### (Production of fuel cell)

Production of fuel electrode slurry: a zirconia sol solution (concentration of zirconia: 30 mass%, average particle diameter: 63 nm, ZR-30BS produced by Nissan Chemical Industries, Ltd.) was prepared. Powder of YSZ having a 50% cumulative particle diameter (D50) of 0.5 µm and nickel oxide having the D50 of 5 µm were mixed at a predetermined mass ratio. The resulting mixed powder and the above solution were mixed at a mass ratio of 8:1 and stirred by a planetary mill to obtain the slurry. A mixing ratio of the powder of YSZ and the nickel oxide was controlled to obtain the coverage shown in Table 1. To this slurry, YSZ particles having the 10% cumulative particle diameter (D10) and the 90% cumulative particle diameter (D90) shown in Table 1 and also having a mass equal to that of the nickel oxide was added, and the resulting mixture was continuously stirred to produce the fuel electrode slurry.

The fuel electrode slurry thus obtained was dried and subjected to a thermal treatment in the atmosphere at 500°C for 1 hour. Resulting powder was crushed. The crushed powder, a porous forming material (PMMA particles 10 µm in size, MX1000 produced by Soken Chemical Engineering Co., Ltd.) and α terpineol of 10% polyvinyl butyral were mixed at a mass ratio of 10:1:1 in a mortar. Then, by using a tape molding method, a fuel electrode sheet was produced to obtain a compact (thickness: 1 mm).

Production of electrolyte slurry: to 100 cc of isopropyl alcohol, 5 g of polyvinyl butyral, 6 g of dioctyl phthalate, and 100 g of the powder of YSZ having D50 of 0.5 µm were mixed to produce the electrolyte slurry.

This electrolyte slurry was applied on the compact described above, so as to form a film with a thickness of 50 µm. Then, the compact was calcined in the atmosphere at 1400°C for 5 hours to obtain the fuel electrode and the solid oxide electrolyte film at a time.

Production of air electrode slurry: to 100 cc of isopropyl alcohol, 10 g of polyvinyl butyral, 6 g of dioctyl phthalate, 50 g of (La_{0.8}Sr_{0.2})MnO₃, and 50 g of yttria stabilized zirconia were mixed to produce the air electrode slurry.

This air electrode slurry was applied on the solid oxide electrolyte film described above, so as to form a film with a thickness of 100 µm. Then, the solid oxide electrolyte film was calcined in the atmosphere at 1100°C for 3 hours. Thus, a unit cell was obtained.

### <Evaluation of cycle resistance property>

Each of the unit cells thus obtained was subjected to an oxidation-reduction cycle test described as follows. That is, in a power generation testing apparatus maintained at 800°C, a fuel electrode side was held in a reducing atmosphere of H₂ at 99.9% for 30 minutes. Then, the atmosphere inside the apparatus was replaced with nitrogen gas and the fuel electrode side was held in the oxidizing atmosphere of the air for 30 minutes. The above process was regarded as one cycle and repeated 50 times. Before and after the cycle test, each of the unit cells was subjected to conductivity measurement using a four-terminal method and measurement of three-point bending strength. Further, a conductivity retention rate and a strength retention rate before and after the cycle test were calculated. Results are shown in Table 1.

[Table 1]

**[Table 1]**

| No. | Classification | Fuel Electrode | | | Cycle Resistance | | | | | |
|---|---|---|---|---|---|---|---|---|---|---|
| | | Coverage (%) | D10 (µm) | D90 (µm) | Conductivity (S/cm) | | | Three-point Bending Strength (MPa) | | |
| | | | | | Before Cycle | After Cycle | Retention Rate | Before Cycle | After Cycle | Retention Rate |
| 1 | Comparative Example | 50 | 0.3 | 5 | 769 | 243 | 0.32 | 201 | 41 | 0.20 |
| 2 | Comparative Example | 10 | | | 925 | 412 | 0.45 | 287 | 32 | 0.11 |
| 3 | Comparative Example | 80 | | | 402 | 122 | 0.30 | 187 | 102 | 0.55 |
| 4 | Comparative Example | 50 | 5 | 18 | 621 | 154 | 0.25 | 189 | 81 | 0.43 |
| 5 | Comparative Example | 10 | | | 856 | 499 | 0.58 | 232 | 31 | 0.13 |
| 6 | Comparative Example | 80 | | | 511 | 113 | 0.22 | 174 | 125 | 0.72 |
| 7 | Example | 50 | 5 | 84 | 745 | 646 | 0.87 | 147 | 138 | 0.94 |
| 8 | Example | 20 | | | 700 | 590 | 0.84 | 150 | 130 | 0.87 |
| 9 | Example | 60 | | | 500 | 470 | 0.94 | 140 | 110 | 0.79 |
| 10 | Example | 10 | | | 921 | 554 | 0.60 | 187 | 112 | 0.60 |
| 11 | Example | 70 | | | 520 | 350 | 0.67 | 120 | 91 | 0.76 |
| 12 | Comparative Example | 80 | | | 483 | 224 | 0.46 | 134 | 98 | 0.73 |
| 13 | Example | 50 | 7 | 91 | 803 | 680 | 0.85 | 156 | 148 | 0.95 |
| 14 | Example | 20 | | | 1000 | 850 | 0.85 | 210 | 180 | 0.86 |
| 15 | Example | 60 | | | 800 | 700 | 0.88 | 250 | 200 | 0.80 |
| 16 | Example | 10 | | | 1022 | 602 | 0.59 | 199 | 116 | 0.58 |
| 17 | Example | 70 | | | 750 | 350 | 0.47 | 120 | 80 | 0.67 |
| 18 | Comparative Example | 80 | | | 698 | 366 | 0.52 | 111 | 74 | 0.67 |
| 19 | Example | 50 | 12 | 101 | 796 | 710 | 0.89 | 124 | 115 | 0.93 |
| 20 | Example | 20 | | | 850 | 800 | 0.94 | 130 | 120 | 0.92 |
| 21 | Example | 60 | | | 700 | 600 | 0.86 | 150 | 130 | 0.87 |
| 22 | Example | 10 | | | 987 | 555 | 0.56 | 144 | 79 | 0.55 |
| 23 | Example | 70 | | | 600 | 340 | 0.57 | 110 | 60 | 0.55 |
| 24 | Comparative Example | 80 | | | 588 | 335 | 0.57 | 99 | 61 | 0.62 |
| 25 | Comparative Example | 50 | 26 | 65 | 759 | 642 | 0.85 | 59 | 35 | 0.59 |
| 26 | Comparative Example | 10 | | | 946 | 799 | 0.84 | 68 | 49 | 0.72 |
| 27 | Comparative Example | 80 | | | 596 | 488 | 0.82 | 49 | 41 | 0.84 |
| 28 | Comparative Example | 50 | 30 | 122 | 896 | 704 | 0.79 | 44 | 31 | 0.70 |
| 29 | Comparative Example | 10 | | | 1066 | 855 | 0.80 | 64 | 39 | 0.61 |
| 30 | Comparative Example | 80 | | | 624 | 499 | 0.80 | 35 | 25 | 0.71 |

After the cycle test, an evaluation was conducted with a standard that the conductivity is at least 300 S/cm, preferably at least 500 S/cm, and the three-point bending strength is at least 50 Mpa. Thus, the configuration of the present invention was obtained.

Note that, although having the coverage of 80%, Comparative Examples No. 18 and No. 24 in Table 1 fulfill the evaluation standard described above. However, none of other data having the coverage of 80% does not fulfill the evaluation standard. Accordingly, by making a moderate estimation of a range fulfilling the evaluation standard, the fuel electrode with the coverage of 80% was excluded according to the present invention.

### INDUSTRIAL APPLICABILITY

The present invention is useful for an SOFC industry and various industries to which the SOFC is applied.

### REFERENCE SIGNS LIST

- 10: fuel electrode doubling as a support
- 11: zirconia particle (first oxide particle)
- 12: zirconia fine particle (second oxide particle)
- 13: Ni particle (electrode particle)
- 20: solid oxide electrolyte film
- 30: air electrode
- 100: solid oxide fuel cell

## Claims

1. A fuel electrode doubling as a support of a solid oxide fuel cell, comprising:
a porous structure formed of first oxide particles having a 10% cumulative particle diameter between 5 µm and 12 µm and a 90% cumulative particle diameter between 84 µm and 101 µm; and
electrode particles having an electrode catalytic activity that cover a surface in a gap of the porous structure and have a surface covered with second oxide particles by 10% to 70%.

2. The fuel electrode according to claim 1, wherein the electrode material has a surface covered with the second solid oxide by 20% to 60%.

3. A fuel-electrode-supported solid oxide fuel cell comprising the fuel electrode according to claim 1 or 2, a solid oxide electrolyte film formed on the fuel electrode, and an air electrode formed on the solid oxide electrolyte film.

4. A method of producing a fuel electrode doubling as a support of a solid oxide fuel cell, comprising steps of:
obtaining a compact from slurry containing powder of first oxide particles having a 10% cumulative particle diameter between 5 µm and 12 µm and a 90% cumulative particle diameter between 84 µm and 101 µm, powder of electrode particles having an electrode catalytic activity, and second oxide particles; and
calcining the compact and thus obtaining a fuel electrode having a porous structure formed of the first oxide particles and the electrode particles that cover a surface in a gap of the porous structure and have a surface covered with the second oxide particles by 10% to 70%.

5. A method of producing a fuel-electrode-supported solid oxide fuel cell comprising, in addition to the steps of the method of producing the fuel electrode according to claim 4, a step of forming a solid oxide electrolyte film on the fuel electrode and a step of forming an air electrode on the solid oxide electrolyte film.

6. The method of producing the solid oxide fuel cell according to claim 5, wherein the solid oxide electrolyte film is formed by applying an electrolyte material on the compact and calcining the compact together with the electrolyte material.
